(19)

Europäisches Patentamt
European Patent Office
Office européen des brevets

(11)  **EP 2 672 743 B1**

(12)  **EUROPEAN PATENT SPECIFICATION**

(45) Date of publication and mention
of the grant of the patent:
**27.06.2018  Bulletin 2018/26**

(21) Application number: **12755286.7**

(22) Date of filing: **02.02.2012**

(51) Int Cl.:
*H04L 12/46* (2006.01)      *H04W 88/08* (2009.01)

(86) International application number:
**PCT/CN2012/070843**

(87) International publication number:
**WO 2012/119491 (13.09.2012 Gazette 2012/37)**

(54) **NON-I/Q DATA TRANSMISSION METHOD AND DEVICE FOR COMMON PUBLIC RADIO INTERFACE**

NON-I/Q-DATENÜBERTRAGUNGSVERFAHREN UND -VORRICHTUNG FÜR EINE GEMEINSAME ÖFFENTLICHE FUNKSCHNITTSTELLE

PROCÉDÉ DE TRANSMISSION DE DONNÉES NON-I/Q ET DISPOSITIF D'INTERFACE RADIO PUBLIQUE COMMUNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **04.03.2011  CN 201110051397**

(43) Date of publication of application:
**11.12.2013  Bulletin 2013/50**

(73) Proprietor: **Huawei Technologies Co., Ltd.
Longgang District
Shenzhen, Guangdong 518129 (CN)**

(72) Inventors:
• **BAO, Shenghua
Shenzhen
Guangdong 518129 (CN)**

• **LI, Xiaopeng
Shenzhen
Guangdong 518129 (CN)**

(74) Representative: **Gill Jennings & Every LLP
The Broadgate Tower
20 Primrose Street
London EC2A 2ES (GB)**

(56) References cited:
**EP-A1- 1 860 895      EP-A2- 2 216 931
CN-A- 1 960 231      CN-A- 101 005 450
CN-A- 101 009 934      CN-A- 102 158 461
JP-A- 2010 166 509**

• **LEAVEY G: "Enabling Distributed Base Station Architectures with CPRI", 20060201, no. 1, 1 February 2006 (2006-02-01), pages 1-28, XP007920617,**

EP 2 672 743 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## TECHNICAL FIELD

The present invention relates to the field of communication technologies, and in particular, to a method and an apparatus for transmitting non-I (In-Phase, inphase component)/Q (Quadrature Phase, quadrature phase component) data through a common public radio interface.

## BACKGROUND

The CPRI (Common Public Radio Interface, common public radio interface) protocol provides a public protocol for an interface between a radio equipment control and a radio equipment. Radio service data transmitted through the existing CPRI protocol is all I/Q-based digital baseband data. Therefore, a division location of a CPRI interface of a radio communication system is before an uplink demodulation or after a downlink modulation. That is to say, an REC (Radio Equipment Control, radio equipment control) completes data baseband processing, and an RE (Radio Equipment, radio equipment) completes a function of simulating a radio frequency domain.

The prior art at least has the following disadvantages:

In the prior art, when the CPRI protocol is used for transmitting I/Q-based digital baseband data, a CPRI interface is located before an uplink demodulation or after a downlink modulation. However, when the CPRI interface is located before the downlink modulation or after the uplink demodulation, service data transmitted on the CPRI interface is non-I/Q-based digital baseband data, which is called non-I/Q data for short. When radio service data is non-I/Q data, the existing CPRI protocol cannot complete transmission between an REC and an RE, leading to a great limitation on application.

Gerry Leavey, "Enabling Distributed Base Station Architectures with CPRI", PMC-Sierra, Inc., PMC-2051877 describes how CPRI can be implemented across a distributed base station architecture.

European patent application number 1860895 A1 describes how CPRI can be implemented using an Ethernet physical layer.

## SUMMARY

To solve the problem in the prior art that non-I/Q data cannot be transmitted between an REC and an RE through a CPRI protocol, embodiments of the present invention provide a method and an apparatus for transmitting non-I/Q data through a common public radio interface. The technical solutions are described as follows:

In one aspect, the present invention provides a method for transmitting non-I/Q data through a common public radio interface, including: when the common public radio interface is located before a downlink modulation or after an uplink demodulation, adding a packet header to data transmitted on the common public radio interface and then encapsulating the data into an information packet, where the packet header at least includes one or more than one of the following fields: a destination address field, a source address field, a packet type field, a packet start/end flag field, a data length field, and a serial number field; mapping the information packet to one or more than one information packet container; bearing the information packet container in a super frame; and transmitting the super frame through the common public radio interface;

wherein the bearing the information packet container in the super frame specifically comprises:

combining all information packet containers that bear the same information packet into one information packet container block;

bearing the information packet container block in the super frame;

determining whether the super frame has emptiness; and

adding a padding bit information packet container to an empty place of the super frame if the super frame has the emptiness, wherein the padding bit information packet container is filled with padding bits.

In another aspect, the present invention provides an apparatus for transmitting non-I/Q data through a common public radio interface, including: an encapsulation module, configured to: when the common public radio interface is located before the downlink modulation or after the uplink demodulation, add a packet header to data transmitted on the common public radio interface and then encapsulate the data into an information packet, where the packet header at least includes one or more than one of the following fields: a destination address field, a source address field, a packet type field, a packet start/end flag field, a data length field, and a serial number field; a mapping module, configured to map the information packet to one or more than one information packet container; a bearing module, configured to bear the information packet container in a super frame;

and a transmission module, configured to transmit the super frame through the common public radio interface;

wherein the bearing module comprises:

a combining unit, configured to combine all information container packets that bear the same information packet into one information packet container block; and

a second padding unit, configured to bear the information packet container block in the super frame, and determine whether the super frame has emptiness; and add a padding bit information packet container to an empty place of the super frame if the super frame has the emptiness, wherein the padding bit information packet container is filled with padding bits.

The embodiments of the present invention can bear non-I/Q data in a super frame, so that when the common public radio interface is located before the downlink modulation or after the uplink demodulation, the super frame is sent through the common public radio interface. This may enable non-I/Q data to be transmitted between an RE and an REC, and implements bearing of the non-I/Q data in a CPRI frame.

**BRIEF DESCRIPTION OF DRAWINGS**

To illustrate the technical solutions in the embodiments of the present invention more clearly, the following briefly introduces the accompanying drawings required for describing the embodiments. Apparently, the accompanying drawings in the following description show merely some embodiments of the present invention, and persons of ordinary skill in the art may still derive other drawings from these accompanying drawings without creative efforts.

FIG. 1 is a schematic flowchart according to an embodiment of the present invention;

FIG. 2 is a schematic flowchart according to another embodiment of the present invention;

FIG. 3 is a schematic structural diagram of an information packet according to an embodiment of the present invention;

FIG. 4 is a schematic flowchart of step 203 according to another embodiment of the present invention;

FIG. 5 is a schematic flowchart of step 204 according to another embodiment of the present invention;

FIG. 6 is a schematic structural diagram according to another embodiment of the present invention;

FIG. 7 is a schematic structural diagram according to another embodiment of the present invention;

FIG. 8 is a schematic structural diagram of a frame where an information packet is borne in a plurality of information packet containers according to an embodiment of the present invention; and

FIG. 9 is a schematic diagram of a super frame that bears information packet containers according to an embodiment of the present invention.

**DESCRIPTION OF EMBODIMENTS**

To make the objectives, technical solutions, and advantages of the present invention more clearly, the following further describes in detail the implementation manners of the present invention with reference to the accompanying drawings.

The technical solutions of the present invention may be applied to various communication systems, such as a global system for mobile communications (GSM, Global System for Mobile communications), a code division multiple access (CDMA, Code Division Multiple Access) system, wideband code division multiple access (WCDMA, Wideband Code Division Multiple Access Wireless) system, general packet radio service (GPRS, General Packet Radio Service) system and Long Term Evolution (LTE, Long Term Evolution) system.

In addition, this application describes various aspects based on a radio equipment (RE) and/or a radio equipment control (REC). An RE may refer to a radio equipment that provides voice and/or data connectivity for a user. An REC is a connection point between a base transceiver station and a mobile switching center. It is a component of an access network, and also provides an interface for exchanging information between a base station and a mobile switching center. One base station controller generally controls several base transceiver stations, and its major functions are managing a radio channel, implementing a call, establishing and releasing a communication link, and controlling a cross-area handover of a mobile station in the local control area. For example, an REC may be a base station controller (BSC, Base Station Controller) in GSM or CDMA, and may also be a radio network controller (RNC, Radio Network Controller) in WCDMA.

Various aspects are described in the form of a system that may include one or more devices, components, modules, or units, and so on. It should be understood or comprehended that, various systems may include an extra added device, component, module, and/or unit, and so on, and/or may not include all of the devices, components, modules, and/or units, and so on that are discussed with reference to the accompanying drawings. In another aspect of the present invention, a combination of these methods may be used.

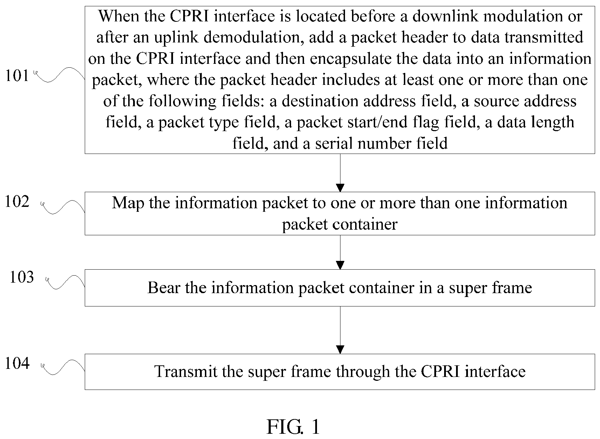

In addition, the term "and/or" in this application is only an association relationship for describing associated objects, and represents that three relationships may exist, for example, A and/or B may represent the following three cases: A exists separately, both A and B exist, or B exists separately. In addition, the symbol "/" in this application usually represents that associated objects before and after the symbol are in an "or" relationship. An embodiment of the present invention provides a method for transmitting non-I/Q data through a common public radio interface. The transmission method is used for data transmission between an REC and an RE. The method may be implemented by an REC to transmit data to a peer RE. Alternatively, the method may also be implemented by an RE to transmit data to a peer REC. The process is as shown in FIG. 1.

101: When a CPRI interface is located before a downlink modulation or after an uplink demodulation, add a packet header to data transmitted on the CPRI interface and then encapsulate the data into an information packet, where the packet header at least includes one or more than one of the following fields: a destination address field, a source address field, a packet type field, a packet start/end flag field, a data length field, and a serial number field.

102: Map the information packet to one or more than one information packet container.

103: Bear the information packet container in a super frame.

For example, in the CPRI protocol, every 256 CPRI frames form a super frame, and the length of every 150 super frames is 10 ms.

104: Transmit the super frame through the CPRI interface.

The embodiment of the present invention can bear non-I/Q data in a super frame, so that when the common public radio interface is located before the downlink modulation or after the uplink demodulation, the super frame is sent through the common public radio interface, thereby enabling non-I/Q data to be transmitted between an RE and an REC and implementing bearing of the non-I/Q data in a CPRI frame.

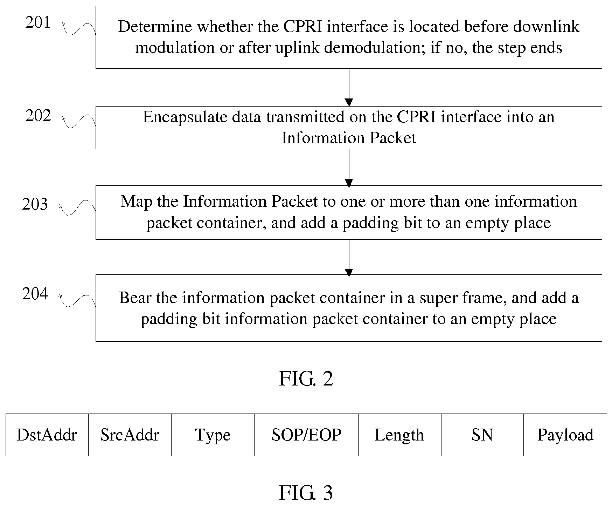

Another embodiment of the present invention provides a method for transmitting non-I/Q data through a common public radio interface. The transmission method is used for data transmission between an REC and an RE. The method may be implemented by an REC to transmit data to a peer RE. Alternatively, the method may also be implemented by an RE to transmit data to a peer REC. The process is as shown in FIG. 2, including:

201: Determine whether the CPRI interface is located before the downlink modulation or after the uplink demodulation; if no, data transmitted on the CPRI interface is existing I/Q data, a method in the prior art may be adopted to transmit the data, and the step ends; or if yes, perform the following steps.

202: Encapsulate the data transmitted on the CPRI interface into an Information Packet (information packet). Specifically, a data packet header may be added to the data. The information packet may, as shown in FIG. 3, include at least one of the following fields:

DstAddr: destination address field, including a destination address of an RE or REC, where the length of the field relies on the number of REs/RECs of a base station system;

SrcAddr: source address field, including a source address of the RE or REC, where the length of the field relies on the number of REs/RECs of a base station system;

Type: packet type field, used to indicate whether the packet is empty, and when the bit is 0, indicating an empty packet;

SOP/EOP: packet start/end flag field, indicating the start and end of one long non-I/Q data frame transmitted by a plurality of information packets, and this field containing two bits, where 2'b10 indicates the start of the non-I/Q data frame, 2'b01 indicates the end of the non-I/Q data frame, 2'b00 indicates the middle of the non-I/Q data frame, and 2'b11 indicates that the non-I/Q data frame does not need to be divided into a plurality of information packets for transmission;

Length: data length field, and this field indicating the length of payload in the packet, where the unit is Byte;

SN: serial number field, indicating a serial number of an information packet of the same type, and the field being used by a recipient to check out-of-order and a packet loss problem of a received packet; and

Payload: payload field, where in the field, there is payload borne in an information packet.

203: Map the information packet to one or more than one information packet container, and add a padding bit to an empty place.

The information packet container (Information Packet Container) is a part of a user data block (User Data Block) in a basic frame. The user data block includes of W basic frames whose serial numbers are 1-15.

The number of bytes contained in the information packet container is $W_{IPC} = ((T/8) \times X)$, where X = 1-15, and T is the bit width. X is the number of columns occupied by one information packet container in one basic frame. During an application, X is determined according to the traffic of an information packet.

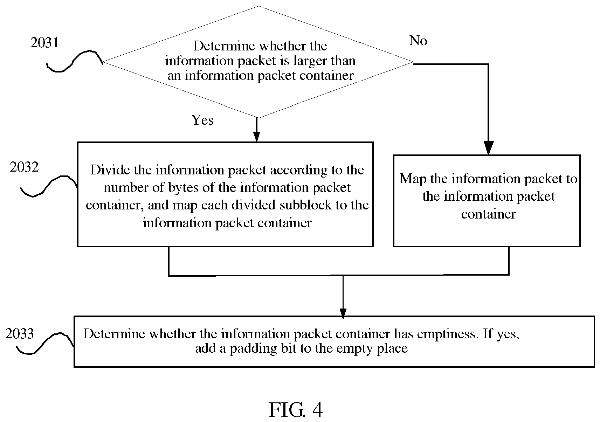

Therefore, the process of step 203 may be as shown in FIG. 4 and is specifically as follows:

2031: Determine whether the number of bytes of the information packet is larger than the number of bytes of an information packet container. If yes, go to 2032. If no, map the information packet to the information packet container and go to 2033.

2032: Divide the information packet according to the number of bytes of the information packet container, and map each divided subblock to the information packet container.

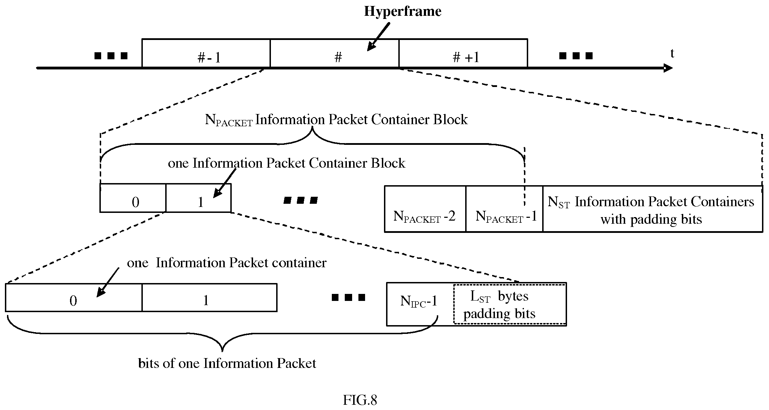

Specifically, as shown in FIG. 8, a situation where one information packet container cannot bear all information packets occurs; therefore, during the encapsulation, one information packet may be borne in a plurality of information packet containers. A dividing method may be as follows: first obtaining the number of bytes of the information packet container, and then dividing an information packet into two or more subblocks whose size is the same as the size of the information packet container, and mapping each subblock to the information packet container.

2033: Determine whether the information packet container has emptiness. If yes, add a padding bit to the empty place.

Specifically, as shown in FIG. 8, a situation where one information packet container cannot bear all information packets occurs; therefore, during the encapsulation, one information packet may be borne in a plurality of information packet containers. That is to say, if an information packet is smaller than or equal to an information packet container, the information packet may be borne in one information packet container. If the information packet container still has an empty place, a padding bit is added to the empty place. If the information packet is larger than the information packet container, the information packet may be borne in $N_{IPC}$ information packet containers, and whether a last information packet container has emptiness is determined. If yes, a padding bit is added.

The specific calculation formula may be as follows:

$$N_{IPC} = ceil\left\{\frac{L_{pkg}}{W_{IPC}}\right\}$$

The $N_{IPC}$ is the number of information packet containers that are configured to bear one information packet. A result returned by the Ceil (a) function is the smallest integer that is larger than or equal to a. The $L_{pkg}$ is the length of an information packet. Because after bearing, it is possible that an information packet container is not exactly fully filled with an information packet, then a padding bit may be added to an empty place, where padding bit $L_{ST} = N_{IPC} \times W_{IPC} - L_{pkg}$.

204: Bear the information packet container in a super frame, and add a padding bit information packet container to an empty place.

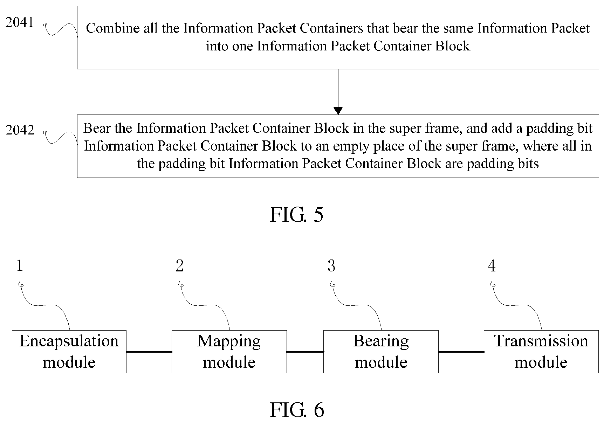

204 may be as shown in FIG. 5 and is specifically as follows:

2041: Combine all information packet containers that bear the same information packet to into one Information Packet Container Block (information packet container block).

2042: Bear the information packet container block in the super frame, and add a padding bit information packet container block to an empty place of the super frame, where all in the padding bit information packet container block are padding bits.

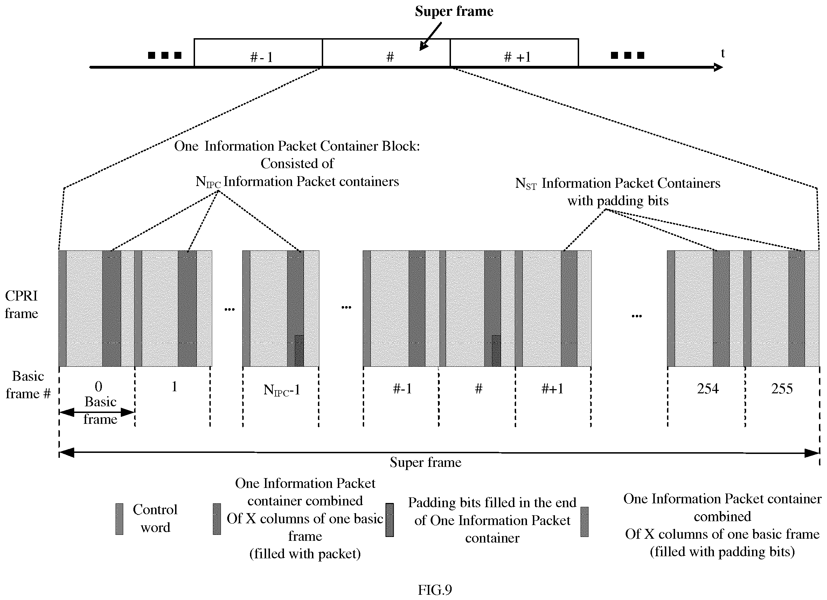

Specifically, as shown in FIG. 9, one super frame may bear a maximum of 256 information packet containers; therefore, one super frame may contain $N_{PACKET}$ information packets, that is:

$$N_{PACKET} = floor\left\{\frac{256}{N_{IPC}}\right\}$$

A result returned by the *floor* (a) function is the largest integer that is smaller than or equal to a.

In addition, each super frame has an empty place; therefore, $N_{ST}$ information packet container blocks that contain a padding bit may be added at the end of each super frame, where:

$$N_{ST} = 256 - N_{PACKET} \times N_{IPC}.$$

The embodiment of the present invention provides a manner to generate a super frame for various information packets, thereby improving the availability of the method in the embodiment of the present invention.

Another embodiment of the present invention provides an apparatus for transmitting non-I/Q data through a common public radio interface. The apparatus specifically may be an REC or an RE, of which the structure is as shown in FIG. 6, including an encapsulation module 1, a mapping module 2, a bearing module 3, and a transmission module 4.

The encapsulation module 1 is configured to: when the common public radio interface is located before the downlink modulation or after the uplink demodulation, add a packet header to data transmitted on the common public radio interface and then encapsulate the data into an information packet, where the packet header at least includes one or more than one of the following fields: a destination address field, a source address field, a packet type field, a packet start/end flag field, a data length field, a serial number field, and a payload field.

The mapping module 2 is configured to map the information packet to one or more than one information packet container.

The bearing module 3 is configured to bear the information packet container in a super frame.

The transmission module 4 is configured to transmit the super frame through the common public radio interface.

The embodiment of the present invention can bear non-I/Q data in a super frame, so that when the common public radio interface is located before the downlink modulation or after the uplink demodulation, the super frame is sent through the common public radio interface, thereby enabling non-I/Q data to be transmitted between an RE and an REC and implementing bearing of the non-I/Q data in a CPRI frame.

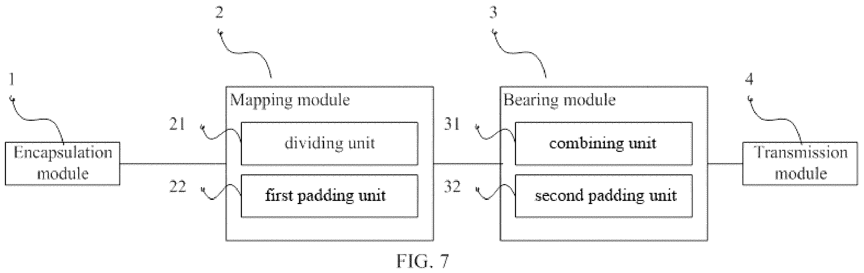

Another embodiment of the present invention provides an apparatus for transmitting non-I/Q data through a common public radio interface. The apparatus specifically may be an REC or an RE, of which the structure is as shown in FIG. 7, including an encapsulation module 1, a mapping module 2, and a bearing module 3.

The encapsulation module 1 is configured to: when a common public radio interface is located before a downlink modulation or after an uplink demodulation, add a packet header to data transmitted on the common public radio interface and then encapsulate the data into an information packet. Specifically, a data packet header may be added to the data. The data packet header may, as shown in FIG. 3, include the following fields:

> DstAddr: destination address field, including a destination address of an RE or REC, where the length of the field relies on the number of REs/RECs of a base station system;
>
> SrcAddr: source address field, including a source address of the RE or REC, where the length of the field relies on the number of REs/RECs of a base station system;
>
> Type: packet type field, used to indicate whether the packet is empty, and when the bit is 0, indicating an empty packet;
>
> SOP/EOP: packet start/end flag field, used to indicate the start and end of one long non-I/Q data frame transmitted by a plurality of information packets, this field containing two bits, where 2'b10 indicates the start of the non-I/Q data frame, 2'b01 indicates the end of the non-I/Q data frame, 2'b00 indicates the middle of the non-I/Q data frame, and 2'b11 indicates that the non-I/Q data frame does not need to be divided into a plurality of information packets for transmission;
>
> Length: data length field, and this field indicating the length of payload in the packet, where the unit is Byte;
>
> SN: serial number field, indicating a serial number of an information packet of the same type, and the field being used by a recipient to check out-of-order and a packet loss problem of a received packet; and
> Payload: payload field, where in the field, there is payload borne in an information packet.

The mapping module 2 is configured to map the information packet to one or more than one information packet container.

The information packet container (Information Packet Container) is a part of a user data block (User Data Block) in a basic frame. The user data block consists of W basic frames whose serial numbers (defined in 4.2.7.1.1 in the CPRI protocol) are 1-15.

The number of bytes contained in the information packet container is $W_{IPC} = ((T/8) \times X)$, where X = 1-15. For the definition of T, reference is made to Table 3 in the CPRI protocol. X is the number of columns occupied by one information packet container in one basic frame. During an application, X is determined according to the traffic of an information packet.

Therefore, the mapping module 2 may include a dividing unit 21.

The dividing unit 21 is configured to determine whether the number of bytes of the information packet is larger than the number of bytes of an information packet container; if yes, divide the information packet according to the number of bytes of the information packet container, and map each subblock to the information packet container; or if no, map the information packet to the information packet container.

The mapping module 2 may further include a first padding unit 22.

The first padding unit 22 is configured to determine whether the information packet container has emptiness; and if yes, add a padding bit to an empty place.

A situation where one information packet container cannot bear all information packets occurs; therefore, during the encapsulation, one information packet may be borne in a plurality of information packet containers. That is to say, if an information packet is smaller than or equal to an information packet container, the information packet may be borne in one information packet container. If the information packet container still has an empty place, a padding bit is added to the empty place. If the information packet is larger than the information packet container, the information packet may be borne in $N_{IPC}$ information packet containers, and whether a last information packet container has emptiness is determined. If yes, a padding bit is added.

The specific calculation formula may be as follows:

$$N_{IPC} = ceil\left\{\frac{L_{pkg}}{W_{IPC}}\right\}$$

The $N_{IPC}$ is the number of information packet containers that are configured to bear one information packet. A result returned by the Ceil (a) function is the smallest integer that is larger than or equal to a. The $L_{pkg}$ is the length of an information packet. Because after encapsulation, it is possible that an information packet container is not exactly fully filled with an information packet, then a padding bit may be added to an empty place, where padding bit $L_{ST} = N_{IPC} \times W_{IPC} - L_{pkg}$.

The bearing module 3 is configured to bear the information packet container in a super frame.

The bearing module 3 may further include a combining unit 31 and a second padding unit 32.

The combining unit 31 is configured to combine all information packet containers that bear the same information packet to into one Information Packet Container Block (information packet container block).

The second padding unit 32 is configured to encapsulate the information packet container block into the super frame, and add a padding bit information packet container block to an empty place of the super frame, where all in the padding bit information packet container block are padding bits.

One super frame may bear a maximum of 256 information packet containers; therefore, one super frame may contain $N_{PACKET}$ information packets, that is: that is,

$$N_{PACKET} = floor\left\{\frac{256}{N_{IPC}}\right\}$$

A result returned by the *floor* (a) function is the largest integer that is smaller than or equal to a.

In addition, each super frame has an empty place; therefore, NST information packet container blocks that contain a padding bit may be added at the end of each super frame, where:

$$N_{ST} = 256 - N_{PACKET} \times N_{IPC} .$$

The embodiment of the present invention provides a manner to generate a super frame for various information packets, thereby improving the availability of the method in the embodiment of the present invention.

It should be noted that, the embodiments only use division of the functional modules for example for description. In an actual application, the functions may be assigned to different functional modules for implementation as required. That is to say, the internal structure of the apparatus is divided into different functional modules to implement all or some of the foregoing described functions. The methods provided in the apparatus embodiment and the method embodiment belong to the same concept. Therefore, the same part is not described herein again.

In the several embodiments provided by the present application, it should be understood that, the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical or other forms.

The units described as separate parts may or may not be physically separate, and parts displayed as units may or may not be physical units, and may be located in one position, or may be distributed on a plurality of network units. Apart or all of the units may be selected according to an actual need to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated units are implemented in the form of a software functional unit and sold or used as an independent product, the integrated units may be stored in a computer readable storage medium. Based on such an understanding, the technical solutions of the present invention essentially, or the part contributing to the prior art, or all or a part of the technical solutions may be implemented in the form of a software product. The computer software product is stored in a storage medium and includes several instructions for instructing a computer device (which may be a personal computer, a server, a network device, or the like) to perform all or a part of the steps of the methods described in the embodiments of the present invention. The storage medium includes any medium that can store program codes, such as a USB flash drive, a removable hard disk, a read-only memory (ROM, Read-Only Memory), a random access memory (RAM, Random Access Memory), a magnetic disk, or an optical disk.

The foregoing descriptions are merely specific implementation manners of the present invention, but are not intended to limit the protection scope of the present invention. Any variation or replacement readily figured out by persons skilled in the art within the technical scope disclosed in the present invention shall fall within the protection scope of the present invention. Therefore, the protection scope of the present invention shall be subject to the protection scope of the claims.

**Claims**

1. A method for transmitting non-I/Q data through a common public radio interface, comprising:

   encapsulating a data transmitted on the common public radio interface into an information packet after the data is added a packet header if the common public radio interface is located before a downlink modulation or after an uplink demodulation, wherein the packet header at least comprises one or more than one of the following fields: a destination address field, a source address field, a packet type field, a packet start/end flag field, a data length field, and a serial number field;

mapping the information packet to one or more than one information packet container;

bearing the information packet container in a super frame; and

transmitting the super frame through the common public radio interface;

wherein the bearing the information packet container in the super frame specifically comprises:

combining all information packet containers that bear the same information packet into one information packet container block;

bearing the information packet container block in the super frame;

determining whether the super frame has emptiness; and

adding a padding bit information packet container to an empty place of the super frame if the super frame has the emptiness, wherein the padding bit information packet container is filled with padding bits.

2. The method according to claim 1, wherein the mapping the information packet to the one or more than one information packet container specifically comprises:

determining whether the number of bytes of the information packet is larger than the number of bytes of an information packet container;

dividing the information packet into multiple subblocks according to the number of bytes of the information packet container, and mapping each divided subblock to the information packet container if the number of the bytes of the information packet is larger than the number of the bytes of the information packet container; or

mapping the information packet to the information packet container if the number of the bytes of the information packet is not larger than the number of the bytes of the information packet container.

3. The method according to claim 2, further comprises: determining whether the information packet container that bears the information packet has emptiness; and if the information packet container that bears the information packet has the emptiness, adding a padding bit to an empty place.

4. The method according to claim 3, wherein the determining whether the information packet container that bears the information packet has the emptiness is calculated by the following formula:

$$\mathrm{N_{IPC}} = ceil\left\{ \frac{L_{pkg}}{\mathrm{W_{IPC}}} \right\}$$

wherein $W_{IPC}$ is the number of the bytes in the information packet container, $N_{IPC}$ is the number of information packet containers that are configured to bear one information packet, a result returned by the Ceil (a) function is the smallest integer that is larger than or equal to a, and $L_{pkg}$ is a length of an information packet.

5. The method according to claim 2, 3 or 4, wherein the number of the bytes in the information packet container is calculated by the following formula:

$$\mathrm{W_{IPC}} = \left( (T/8) \times X \right)_{,}$$

wherein $W_{IPC}$ is the number of the bytes in the information packet container, $X = 1$ to 15, T is a bit width, and X is the number of columns occupied by one information packet container in one basic frame.

6. An apparatus for transmitting non-I/Q data through a common public radio interface, comprising:

an encapsulation module, configured to: if the common public radio interface is located before a downlink modulation or after an uplink demodulation, encapsulate a data transmitted on the common public radio interface into an information packet after the data is added a packet header, wherein the packet header at least comprises one or more than one of the following fields: a destination address field, a source address field, a packet type field, a packet start/end flag field, a data length field, and a serial number field;

a mapping module, configured to map the information packet to one or more than one information packet container;

a bearing module, configured to bear the information packet container in a super frame; and

a transmission module, configured to transmit the super frame through the common public radio interface;

wherein the bearing module comprises:

a combining unit, configured to combine all information container packets that bear the same information packet into one information packet container block; and

a second padding unit, configured to bear the information packet container block in the super frame, and determine whether the super frame has emptiness; and add a padding bit information packet container to an empty place of the super frame if the super frame has the emptiness, wherein the padding bit information packet container is filled with padding bits.

**7.** The apparatus according to claim 6, wherein the mapping module comprises:
a dividing unit, configured to determine whether the number of bytes of the information packet is larger than the number of bytes of an information packet container; divide the information packet into multiple subblocks according to the number of bytes of the information packet container if the number of the bytes of the information packet is larger than the number of the bytes of the information packet container, and map each subblock to the information packet container; or, map the information packet to the information packet container if the number of the bytes of the information packet is not larger than the number of the bytes of the information packet container.

**8.** The apparatus according to claim 7, wherein the mapping module further comprises:
a first padding unit, configured to determine whether the information packet container has emptiness, and add a padding bit to an empty place if the information packet container has the emptiness.

**9.** The apparatus according to claim 8, wherein the first padding unit is further configured to perform the following formula to determine whether the information packet container has emptiness:

$$\mathrm{N}_{IPC} = ceil\left\{\frac{L_{pkg}}{\mathrm{W}_{IPC}}\right\}$$

wherein $\mathrm{W}_{IPC}$ is the number of the bytes in the information packet container, $\mathrm{N}_{IPC}$ is the number of information packet containers that are configured to bear one information packet, a result returned by the Ceil (a) function is the smallest integer that is larger than or equal to a, and $L_{pkg}$ is a length of an information packet.

**10.** The apparatus according to any of claims 7 to 9, wherein the first padding unit is further configured to perform the following formula to determine the number of the bytes in the information packet container:

$$\mathrm{W}_{IPC} = \left((T/8) \times X\right),$$

wherein $\mathrm{W}_{IPC}$ is the number of the bytes in the information packet container, X = 1 to 15, T is a bit width, and X is the number of columns occupied by one information packet container in one basic frame.

**11.** A computer software product comprising computer program code, which, when instructing a computer device, will cause the computer device to perform the steps of a method according to any one of claims 1 to 5.

**Patentansprüche**

**1.** Verfahren zum Übertragen von Nicht-I/Q-Daten durch eine gemeinsame öffentliche Funkschnittstelle, umfassend:

Einkapseln von Daten, die auf der gemeinsamen öffentlichen Funkschnittstelle übertragen werden, in ein Informationspaket, nachdem den Daten ein Paket-Header hinzugefügt wird, falls sich die gemeinsame öffentliche Funkschnittstelle vor einer Abwärtsstreckenmodulation oder nach einer Aufwärtsstreckendemodulation befindet, wobei der Paket-Header mindestens eines oder mehr als eines der folgenden Felder umfasst: ein Zieladressfeld, ein Quellenadressfeld, ein Pakettypfeld, ein Paketstart-/-ende-Flag-Feld, ein Datenlängenfeld und ein Seriennummernfeld;
Abbilden des Informationspakets zu einem oder mehr als einem Informationspaketcontainer;
Tragen des Informationspaketcontainers in einem Superrahmen und
Übertragen des Superrahmens durch die gemeinsame öffentliche Funkschnittstelle;
wobei das Tragen des Informationspaketcontainers im Superrahmen spezifisch Folgendes umfasst:

Kombinieren aller Informationspaketcontainer, die das gleiche Informationspaket tragen, in einen Informationspaketcontainerblock;
Tragen des Informationspaketcontainerblocks im Superrahmen;
Bestimmen, ob der Superrahmen leer ist, und
Hinzufügen eines Auffüllbit-Informationspaketcontainers zu einer leeren Stelle des Superrahmens, falls der Superrahmen leer ist, wobei der Auffüllbit-Informationspaketcontainer mit Auffüllbits gefüllt ist.

**2.** Verfahren nach Anspruch 1, wobei das Abbilden des Informationspakets zu dem einen oder dem mehr als einen Informationspaketcontainer spezifisch Folgendes umfasst:

Bestimmen, ob die Anzahl von Bytes des Informationspakets größer als die Anzahl von Bytes eines Informationspaketcontainers ist;
Unterteilen des Informationspakets in mehrere Unterblöcke gemäß der Anzahl von Bytes des Informationspaketcontainers und Abbilden jedes unterteilten Unterblocks zum Informationspaketcontainer, falls die Anzahl der Bytes des Informationspakets größer als die Anzahl der Bytes des Informationspaketcontainers ist; oder Abbilden des Informationspakets zum Informationspaketcontainer, falls die Anzahl der Bytes des Informationspakets nicht größer als die Anzahl der Bytes des Informationspaketcontainers ist.

3. Verfahren nach Anspruch 2, das ferner Folgendes umfasst:
Bestimmen, ob der Informationspaketcontainer, der das Informationspaket trägt, leer ist; und falls der Informationspaketcontainer, der das Informationspaket trägt, leer ist, Hinzufügen eines Auffüllbits zu einer leeren Stelle.

4. Verfahren nach Anspruch 3, wobei das Bestimmen, ob der Informationspaketcontainer, der das Informationspaket trägt, leer ist, durch die folgende Formel berechnet wird:

$$N_{IPC} = ceil\left\{\frac{L_{pkg}}{W_{IPC}}\right\},$$

wobei $W_{IPC}$ die Anzahl der Bytes im Informationspaketcontainer ist, $N_{IPC}$ die Anzahl von Informationspaketcontainern ist, die zum Tragen eines Informationspakets konfiguriert sind, ein Ergebnis, das durch die Ceil(a)-Funktion zurückgegeben wird, die kleinste ganze Zahl ist, die größer oder gleich a ist, und $L_{pkg}$ eine Länge eines Informationspakets ist.

5. Verfahren nach Anspruch 2, 3 oder 4, wobei die Anzahl der Bytes im Informationspaketcontainer durch die folgende Formel berechnet wird:

$$W_{IPC} = ((T/8) \times X),$$

wobei $W_{IPC}$ die Anzahl der Bytes im Informationspaketcontainer ist, X = 1 bis 15 ist, T eine Bitbreite ist und X die Anzahl von Spalten ist, die durch einen Informationspaketcontainer in einem Grundrahmen belegt werden.

6. Vorrichtung zum Übertragen von Nicht-I/Q-Daten durch eine gemeinsame öffentliche Funkschnittstelle, umfassend:

ein Einkapselungsmodul, das, falls sich die gemeinsame öffentliche Funkschnittstelle vor einer Abwärtsstreckenmodulation oder nach einer Aufwärtsstreckendemodulation befindet, konfiguriert ist zum Einkapseln von Daten, die auf der gemeinsamen öffentlichen Funkschnittstelle übertragen werden, in ein Informationspaket, nachdem den Daten ein Paket-Header hinzugefügt wird, wobei der Paket-Header mindestens eines oder mehr als eines der folgenden Felder umfasst: ein Zieladressfeld, ein Quellenadressfeld, ein Pakettypfeld, ein Paketstart-/ende-Flag-Feld, ein Datenlängenfeld und ein Seriennummernfeld;
ein Abbildungsmodul, das konfiguriert ist zum Abbilden des Informationspakets zu einem oder mehr als einem Informationspaketcontainer;
ein Tragemodul, das konfiguriert ist zum Tragen des Informationspaketcontainers in einem Superrahmen; und
ein Übertragungsmodul, das konfiguriert ist zum Übertragen des Superrahmens durch die gemeinsame öffentliche Funkschnittstelle;
wobei das Tragemodul Folgendes umfasst:

eine Kombiniereinheit, die konfiguriert ist zum Kombinieren aller Informationscontainerpakete, die das gleiche Informationspaket tragen, in einen Informationspaketcontainerblock und
eine zweite Auffülleinheit, die konfiguriert ist zum Tragen des Informationspaketcontainerblocks im Superrahmen und zum Bestimmen, ob der Superrahmen leer ist; und zum Hinzufügen eines Auffüllbit-Informationspaketcontainers zu einer leeren Stelle des Superrahmens, falls der Superrahmen leer ist, wobei der Auffüllbit-Informationspaketcontainer mit Auffüllbits gefüllt ist.

7. Vorrichtung nach Anspruch 6, wobei das Abbildungsmodul Folgendes umfasst:
eine Unterteilungseinheit, die konfiguriert ist zum Bestimmen, ob die Anzahl von Bytes des Informationspakets größer als die Anzahl von Bytes eines Informationspaketcontainers ist; zum Unterteilen des Informationspakets in mehrere Unterblöcke gemäß der Anzahl von Bytes des Informationspaketcontainers, falls die Anzahl der Bytes des Informationspakets größer als die Anzahl der Bytes des Informationspaketcontainers ist, und zum Abbilden jedes Unterblocks zum Informationspaketcontainer; oder zum Abbilden des Informationspakets zum Informationspaketcontainer, falls die Anzahl der Bytes des Informationspakets nicht größer als die Anzahl der Bytes des Informationspaketcontainers ist.

**8.** Vorrichtung nach Anspruch 7, wobei das Abbildungsmodul ferner Folgendes umfasst:
eine erste Auffülleinheit, die konfiguriert ist zum Bestimmen, ob der Informationspaketcontainer leer ist; und zum Hinzufügen eines Auffüllbits zu einer leeren Stelle, falls der Informationspaketcontainer leer ist.

**9.** Vorrichtung nach Anspruch 8, wobei die erste Auffülleinheit ferner konfiguriert ist zum Durchführen der folgenden Formel, um zu bestimmen, ob der Informationspaketcontainer leer ist:

$$N_{IPC} = ceil \left\{ \frac{L_{pkg}}{W_{IPC}} \right\},$$

wobei $W_{IPC}$ die Anzahl der Bytes im Informationspaketcontainer ist, $N_{IPC}$ die Anzahl von Informationspaketcontainern ist, die zum Tragen eines Informationspakets konfiguriert sind, ein Ergebnis, das durch die Ceil(a)-Funktion zurückgegeben wird, die kleinste ganze Zahl ist, die größer oder gleich a ist, und $L_{pkg}$ eine Länge eines Informationspakets ist.

**10.** Vorrichtung nach einem der Ansprüche 7 bis 9, wobei die erste Auffülleinheit ferner konfiguriert ist zum Durchführen der folgenden Formel, um die Anzahl der Bytes im Informationspaketcontainer zu bestimmen:

$$W_{IPC} = ((T/8) \times X),$$

wobei $W_{IPC}$ die Anzahl der Bytes im Informationspaketcontainer ist, $X = 1$ bis 15 ist, $T$ eine Bitbreite ist und $X$ die Anzahl von Spalten ist, die durch einen Informationspaketcontainer in einem Grundrahmen belegt werden.

**11.** Computersoftwareprodukt, das Computerprogrammcode umfasst, der, wenn er eine Computervorrichtung anweist, bewirkt, dass die Computervorrichtung die Schritte eines Verfahrens nach einem der Ansprüche 1 bis 5 durchführt.

**Revendications**

**1.** Procédé de transmission de données non I/Q par l'intermédiaire d'une interface radio publique commune, consistant à :

encapsuler des données transmises sur l'interface radio publique commune dans un paquet d'informations après l'ajout d'un en-tête de paquet aux données si l'interface radio publique commune est située avant une modulation en liaison descendante ou après une démodulation en liaison montante, l'en-tête de paquet comprenant au moins un ou plusieurs des champs suivants : un champ d'adresse de destination, un champ d'adresse source, un champ de type de paquet, un champ d'indicateur de début/fin de paquet, un champ de longueur de données et un champ de numéro de série ;
faire correspondre le paquet d'informations à un ou plusieurs conteneurs de paquet d'informations ;
transporter le conteneur de paquet d'informations dans une supertrame ; et
transmettre la supertrame par l'intermédiaire de l'interface radio publique commune ;
le transport du conteneur de paquet d'informations dans la supertrame consistant spécifiquement à :

combiner tous les conteneurs de paquet d'informations qui transportent le même paquet d'informations en un bloc de conteneurs de paquet d'informations ;
transporter le bloc de conteneurs de paquet d'informations dans la supertrame ;
déterminer si la supertrame comporte un vide ou non ; et
ajouter un conteneur de paquet d'informations de bit de remplissage dans un emplacement vide de la supertrame si la supertrame comporte le vide, le conteneur de paquet d'informations de bit de remplissage étant rempli avec des bits de remplissage.

**2.** Procédé selon la revendication 1, dans lequel la mise en correspondance du paquet d'informations avec un ou plusieurs conteneurs de paquet d'informations consiste spécifiquement à :

déterminer si le nombre d'octets du paquet d'informations est supérieur ou non au nombre d'octets d'un conteneur de paquet d'informations ;
diviser le paquet d'informations en de multiples sous-blocs selon le nombre d'octets du conteneur de paquet d'informations, et faire correspondre chaque sous-bloc divisé au conteneur de paquet d'informations si le nombre d'octets du paquet d'informations est supérieur au nombre d'octets du conteneur de paquet d'informations ; ou
faire correspondre le paquet d'informations au conteneur de paquet d'informations si le nombre d'octets du paquet d'informations n'est pas supérieur au nombre d'octets du conteneur de paquet d'informations.

3. Procédé selon la revendication 2, consistant en outre à :
déterminer si le conteneur de paquet d'informations qui transporte le paquet d'informations comporte ou non un vide ; et si le conteneur de paquet d'informations qui transporte le paquet d'informations comporte le vide, ajouter un bit de remplissage dans un emplacement vide.

4. Procédé selon la revendication 3, dans lequel la détermination de savoir si le conteneur de paquet d'informations qui transporte le paquet d'informations comporte ou non le vide est calculée par la formule suivante :

$$N_{IPC} = ceil\left\{\frac{L_{pkg}}{W_{IPC}}\right\}$$

où $W_{IPC}$ est le nombre d'octets du conteneur de paquet d'informations, $N_{IPC}$ est le nombre de conteneurs de paquet d'informations qui sont configurés pour transporter un paquet d'informations, un résultat renvoyé par la fonction Ceil (a) est le plus petit entier supérieur ou égal à a, et $L_{pkg}$ est une longueur d'un paquet d'informations.

5. Procédé selon la revendication 2, 3 ou 4, dans lequel le nombre d'octets du conteneur de paquet d'informations est calculé par la formule suivante :

$$W_{IPC} = \left((T/8) \times X\right),$$

où $W_{IPC}$ est le nombre d'octets du conteneur de paquet d'informations, X = 1 à 15, T est une largeur de bit, et X est le nombre de colonnes occupées par un conteneur de paquet d'informations dans une trame de base.

6. Appareil de transmission de données non I/Q par l'intermédiaire d'une interface radio publique commune, comprenant :

un module d'encapsulation, conçu pour : si l'interface radio publique commune est située avant une modulation en liaison descendante ou après une démodulation en liaison montante, encapsuler des données transmises sur l'interface radio publique commune dans un paquet d'informations après l'ajout d'un en-tête de paquet aux données, l'en-tête de paquet comprenant au moins un ou plusieurs des champs suivants : un champ d'adresse de destination, un champ d'adresse source, un champ de type de paquet, un champ d'indicateur de début/fin de paquet, un champ de longueur de données et un champ de numéro de série ;
un module de mise en correspondance, conçu pour faire correspondre le paquet d'informations à un ou plusieurs conteneurs de paquet d'informations ;
un module de transport, conçu pour transporter le conteneur de paquet d'informations dans une supertrame ; et
un module de transmission, conçu pour transmettre la supertrame par l'intermédiaire de l'interface radio publique commune ;
le module de transport comprenant :

une unité de combinaison, conçue pour combiner tous les paquets de conteneur d'informations qui transportent le même paquet d'informations en un bloc de conteneurs de paquet d'informations ; et
une seconde unité de remplissage, conçue pour transporter le bloc de conteneurs de paquet d'informations dans la supertrame, et déterminer si la supertrame comporte un vide ou non ; et ajouter un conteneur de paquet d'informations de bit de remplissage dans un emplacement vide de la supertrame si la supertrame comporte le vide, le conteneur de paquet d'informations de bit de remplissage étant rempli avec des bits de remplissage.

7. Appareil selon la revendication 6, dans lequel le module de mise en correspondance comprend :
une unité de division, conçue pour déterminer si le nombre d'octets du paquet d'informations est supérieur ou non au nombre d'octets d'un conteneur de paquet d'informations ; diviser le paquet d'informations en de multiples sous-blocs selon le nombre d'octets du conteneur de paquet d'informations si le nombre d'octets du paquet d'informations est supérieur ou non au nombre d'octets du conteneur de paquet d'informations, et faire correspondre chaque sous-bloc au conteneur de paquet d'informations ; ou faire correspondre le paquet d'informations au conteneur de paquet d'informations si le nombre d'octets du paquet d'informations n'est pas supérieur au nombre d'octets du conteneur de paquet d'informations.

8. Appareil selon la revendication 7, dans lequel le module de mise en correspondance comprend en outre :
une première unité de remplissage, conçue pour déterminer si le conteneur de paquet d'informations comporte ou non un vide, et ajouter un bit de remplissage dans un emplacement vide si le conteneur de paquet d'informations comporte le vide.

9. Appareil selon la revendication 8, dans lequel la première unité de remplissage est en outre conçue pour appliquer la formule suivante pour déterminer si le conteneur de paquet d'informations comporte ou non un vide :

$$N_{IPC} = ceil\left\{\frac{L_{pkg}}{W_{IPC}}\right\}$$

où $W_{IPC}$ est le nombre d'octets du conteneur de paquet d'informations, $N_{IPC}$ est le nombre de conteneurs de paquet d'informations qui sont configurés pour transporter un paquet d'informations, un résultat renvoyé par la fonction Ceil (a) est le plus petit entier supérieur ou égal à a, et $L_{pkg}$ est une longueur d'un paquet d'informations.

10. Appareil selon l'une quelconque des revendications 7 à 9, dans lequel la première unité de remplissage est en outre conçue pour appliquer la formule suivante pour déterminer le nombre d'octets du conteneur de paquet d'informations :

$$W_{IPC} = \big((T/8) \times X\big),$$

où $W_{IPC}$ est le nombre d'octets du conteneur de paquet d'informations, X = 1 à 15, T est une largeur de bit, et X est le nombre de colonnes occupées par un conteneur de paquet d'informations dans une trame de base.

11. Produit de logiciel informatique comprenant un code de programme informatique qui, lorsqu'il en donne l'instruction à un dispositif informatique, amène le dispositif informatique à réaliser les étapes d'un procédé selon l'une quelconque des revendications 1 à 5.

101    When the CPRI interface is located before a downlink modulation or after an uplink demodulation, add a packet header to data transmitted on the CPRI interface and then encapsulate the data into an information packet, where the packet header includes at least one or more than one of the following fields: a destination address field, a source address field, a packet type field, a packet start/end flag field, a data length field, and a serial number field

102    Map the information packet to one or more than one information packet container

103    Bear the information packet container in a super frame

104    Transmit the super frame through the CPRI interface

FIG. 1

201 — Determine whether the CPRI interface is located before downlink modulation or after uplink demodulation; if no, the step ends

202 — Encapsulate data transmitted on the CPRI interface into an Information Packet

203 — Map the Information Packet to one or more than one information packet container, and add a padding bit to an empty place

204 — Bear the information packet container in a super frame, and add a padding bit information packet container to an empty place

FIG. 2

| DstAddr | SrcAddr | Type | SOP/EOP | Length | SN | Payload |
|---------|---------|------|---------|--------|-----|---------|

FIG. 3

2031

Determine whether the
information packet is larger than
an information packet container

No

Yes

2032

Divide the information packet according to the
number of bytes of the information packet
container, and map each divided subblock to the
information packet container

Map the information packet to
the information packet
container

2033

Determine whether the information packet container has emptiness. If yes,
add a padding bit to the empty place

FIG. 4

2041 — | Combine all the Information Packet Containers that bear the same Information Packet into one Information Packet Container Block |

2042 — | Bear the Information Packet Container Block in the super frame, and add a padding bit Information Packet Container Block to an empty place of the super frame, where all in the padding bit Information Packet Container Block are padding bits |

## FIG. 5

| 1 Encapsulation module | 2 Mapping module | 3 Bearing module | 4 Transmission module |

## FIG. 6

FIG. 7

**Hyperframe**

··· | #-1 | # | # +1 | ■■■ → t

$N_{PACKET}$ Information Packet Container Block

one Information Packet Container Block

| 0 | 1 | ··· | $N_{PACKET}$ -2 | $N_{PACKET}$ -1 | $N_{ST}$ Information Packet Containers with padding bits |

one Information Packet container

| 0 | 1 | ■■■ | $N_{IPC}$-1 | $L_{ST}$ bytes padding bits |

bits of one Information Packet

FIG.8

**Super frame**

| ■ ■ ■ | #-1 | # | # +1 | ■ ■ ■ | t |

One Information Packet Container Block:
Consisted of
$N_{IPC}$ Information Packet containers

$N_{ST}$ Information Packet Containers
with padding bits

CPRI
frame

Basic
frame #

| 0 Basic frame | 1 | ... | $N_{IPC}$-1 | ... | #-1 | # | #+1 | ... | 254 | 255 |

Super frame

| Control word | One Information Packet container combined Of X columns of one basic frame (filled with packet) | Padding bits filled in the end of One Information Packet container | One Information Packet container combined Of X columns of one basic frame (filled with padding bits) |

FIG.9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 1860895 A1

**Non-patent literature cited in the description**

• **GERRY LEAVEY.** Enabling Distributed Base Station Architectures with CPRI. PMC-Sierra, Inc,